# EUROPÄISCHE PATENTANMELDUNG

(11) **EP 2 813 472 A1**
(43) Veröffentlichungstag der Anmeldung: **17.12.2014**
(21) Anmeldenummer: 14171126.7
(22) Anmeldetag: 04.06.2014
(51) Int. Cl.: C02F 1/00, B01D 24/00

(54) **Vorrichtung zum Aufbereiten von Wasser mit einer Granulatfüllung in einem zylindrischen Gehäuse**

(30) Priorität: 10.06.2013 AT 503782013
(71) Anmelder: Holzer, Ludwig, 4861 Schörfling am Attersee (AT)
(72) Erfinder: Holzer, Ludwig, 4861 Schörfling am Attersee (AT)
(74) Vertreter: Patentanwaltskanzlei Hübscher

(57) **Zusammenfassung**

Es wird eine Vorrichtung zum Aufbereiten von Wasser mit einem zylindrischen Gehäuse (1) und mit einem koaxialen Zu- und Ablauf (3, 4) an den einander gegenüberliegenden Stirnseiten (2) des Gehäuses (1) beschrieben, das zwischen achsnormalen, wasserdurchlässigen Trennwänden (10, 12) Aufnahmekammern (8, 11) für eine Granulatfüllung (9) aufweist. Um vorteilhafte Konstruktionsbedingungen zu schaffen, wird vorgeschlagen, dass das Gehäuse (1) ein zentrales, mit Abstand von seinen Stirnseiten (2) endendes und über axiale Stützwände (6) mit dem Gehäusemantel (13) verbundenes Trägerrohr (5) für einen Einsatz (7) umschließt, der wenigstens eine Aufnahmekammer (8) für die Granulatfüllung (9) zwischen Trennwänden (10) aus einem Drahtgewebe bildet, und dass die axialen Stützwände (6) durch wenigstens eine ringförmige Aufnahmekammer (11) für die Granulatfüllung (9) zwischen achsnormalen, ringförmigen Trennwänden (12) aus einem Drahtgewebe unterbrochen sind.

## Beschreibung

Die Erfindung bezieht sich auf eine Vorrichtung zum Aufbereiten von Wasser mit einem zylindrischen Gehäuse und mit einem koaxialen Zu- und Ablauf an den einander gegenüberliegenden Stirnseiten des Gehäuses, das zwischen achsnormalen, wasserdurchlässigen Trennwänden Aufnahmekammern für eine Granulatfüllung aufweist.

Zur Wasseraufbereitung ist es bekannt, das Wasser durch ein Granulat strömen zu lassen, sodass Adsorptions- und Absorptionswirkungen, aber auch andere Einflüsse, die das Granulat auf das Wasser ausüben kann, genützt werden können. Bekannte Vorrichtungen zur Wasseraufbereitung weisen zu diesem Zweck ein mit einer entsprechenden Granulatfüllung versehenes, zylindrisches Gehäuse mit einem koaxialen Zu- und Ablauf auf den einander gegenüberliegenden Stirnseiten auf. Sollen unterschiedliche Granulatfüllungen nacheinander durchströmt werden, so wird das Gehäuse durch achsnormale, wasserdurchlässige Trennwände in einzelne Aufnahmekammern für die Granulatfüllungen unterteilt. Nachteilig ist allerdings, dass sich aufgrund einer ungleichmäßigen Strömungsausbildung innerhalb des Gehäuses die Granulatfüllungen nicht optimal genützt werden können. Außerdem ist es schwierig, die Granulatfüllungen zu wechseln, insbesondere, wenn mehrere Aufnahmekammern für die Granuulatfüllungen in Strömungsrichtung hintereinander angeordnet sind.

Der Erfindung liegt somit die Aufgabe zugrunde, eine Vorrichtung zum Aufbereiten von Wasser mit Hilfe einer Granulatfüllung so auszugestalten, dass die Granulatfüllung vorteilhaft durchströmt wird und in vergleichsweise einfacher Art gewechselt werden kann.

Ausgehend von einer Vorrichtung der eingangs geschilderten Art löst die Erfindung die gestellte Aufgabe dadurch, dass das Gehäuse ein zentrales, mit Abstand von seinen Stirnseiten endendes und über axiale Stützwände mit dem Gehäusemantel verbundenes Trägerrohr für einen Einsatz umschließt, der wenigstens eine Aufnahmekammer für die Granulatfüllung zwischen Trennwänden aus einem Drahtgewebe bildet, und dass die axialen Stützwände durch wenigstens eine ringförmige Aufnahmekammer für die Granulatfüllung zwischen achsnormalen, ringförmigen Trennwänden aus einem Drahtgewebe unterbrochen sind.

Durch das Vorsehen eines zum zylindrischen Gehäuse koaxialen Trägerrohrs, das durch über den Umfang verteilte, sternförmig verlaufende Stützwände gehalten wird, wird unter der Bedingung, dass das Trägerrohr mit Abstand vor den Stirnseiten des Gehäuses endet, das Gehäuseinnere in mehrere Strömungswege unterteilt, was in Verbindung mit wenigstens einer mit Granulat gefüllten Aufnahmekammer innerhalb des Trägerrohrs und wenigstens einer das Trägerrohr umschließenden ringförmigen Aufnahmekammer zwischen dem Trägerrohr und dem Gehäusemantel zu einer weitgehend gleichmäßigen Durchströmung der Aufnahmekammern als Voraussetzung dafür führt, dass die Wirkung der Granulatfüllung in den einzelnen Aufnahmekammern vorteilhaft genützt werden kann. Dazu kommt, dass der Strömungsquerschnitt innerhalb der Aufnahmekammern durch die Granulatfüllung gegenüber dem Strömungsquerschnitt vor und hinter den Aufnahmekammern erheblich verringert ist, sodass durch die Beschleunigung des Wassers beim Durchtritt durch die Aufnahmekammern die dadurch bedingten mechanischen Einflüsse auf die Wasserbehandlung zusätzlich genützt werden können.

Da die wenigstens eine Aufnahmekammer in Form eines Einsatzes in das Trägerrohr ausgebildet ist, kann diese Aufnahmekammer in vergleichsweise einfacher Art aus dem Trägerrohr entnommen werden, um im Bedarfsfall die Granulatfüllung wechseln zu können. Dies wird ohne eine Abnahme einer Gehäusestirnseite möglich, wenn der Außendurchmesser des Trägerrohrs kleiner als der Innendurchmesser des Zu- und Ablaufs ist, weil in diesem Fall der Einsatz durch den Zu- oder Ablauf aus dem Trägerrohr entnommen werden kann.

Das Auswechseln der Granulatfüllung der ringförmigen Aufnahmekammer zwischen dem Trägerrohr und dem Gehäusemantel ist ebenfalls problemlos möglich, wenn die ringförmige Aufnahmekammer mit einer verschließbaren Füllöffnung im Gehäusemantel versehen ist.

Damit die Wirkungen des Granulats auf das zu behandelnde Wasser in besonderer Weise ausgenützt werden, können der Einsatz für das Trägerrohr wenigstens zwei mit axialem Abstand voneinander angeordnete Aufnahmekammern bzw. das Gehäuse wenigstens zwei mit axialem Abstand voneinander angeordnete ringförmig Aufnahmekammern aufweisen. Bei einer solchen Anordnung der Aufnahmekammern stellt sich zwischen den Aufnahmekammern eine beruhigte Durchflussströmung ein, was für die angestrebte Wirkung von Vorteil ist.

Da die Vorrichtung zur Wasseraufbereitung keinen größeren Druckabfall in der Wasserleitung bedingen soll, kann der Gehäusedurchmesser etwa doppelt so groß wie der des Zu- und Ablaufs gewählt werden, was bei einer Kugelform des Granulats innerhalb der Aufnahmekammern einen freien Strömungsquerschnitt bestimmt, der angenähert dem des Zu- bzw. Ablaufs ist.

In der Zeichnung ist der Erfindungsgegenstand beispielsweise dargestellt. Es zeigen
- Fig. 1: eine erfindungsgemäße Vorrichtung zum Aufbereiten von Wasser in einem schematischen Längsschnitt und
- Fig. 2: diese Vorrichtung in einem Schnitt nach der Linie II-II der Fig. 1.

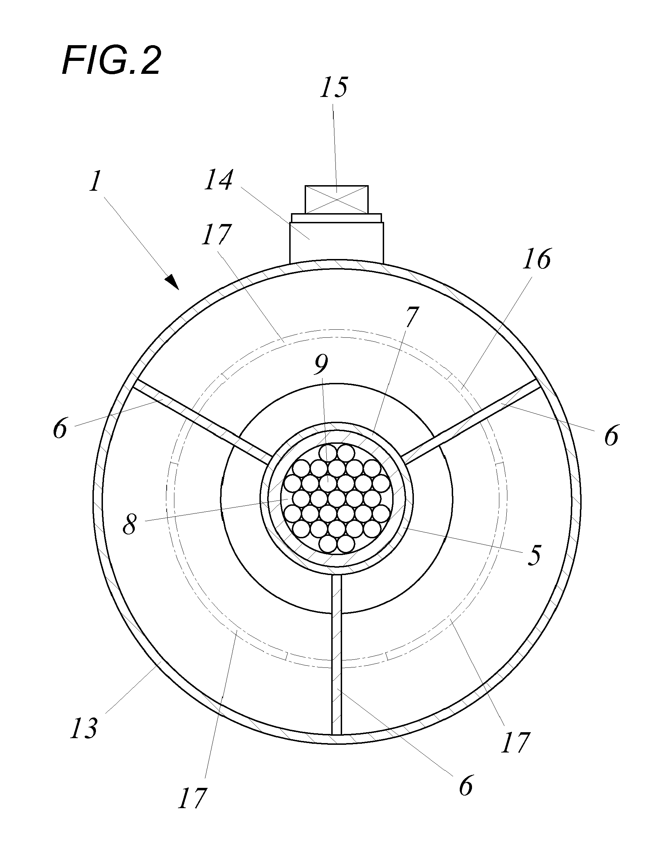

Die dargestellte Vorrichtung weist ein zylindrisches Gehäuse 1 auf, dessen Stirnseiten 2 einerseits mit einem Zulauf 3 und anderseits mit einem Ablauf 4 für das zu behandelnde Wasser versehen sind. Innerhalb des Gehäuses 1 ist ein koaxiales Trägerrohr 5 zwischen axialen Stützwänden 6 angeordnet, die sternförmig verlaufen, wie dies der Fig. 2 entnommen werden kann. Das Trägerrohr 5, das mit axialem Abstand vor den Stirnseiten 2 des Gehäuses 1 endet, nimmt einen rohrförmigen Einsatz 7 auf, der in Endabschnitten zwei Aufnahmekammern 8 für eine Granulatfüllung 9 aufweist. Die Aufnahmekammern 8 werden durch achsnormale Trennwände 10 aus einem Drahtgewebe begrenzt, das mit Hilfe von Sprengringen im rohrförmigen Einsatz 7 gehalten wird.

Die axialen Stützwände 6 zur Halterung des Trägerrohrs 5 werden durch zwei weitere Aufnahmekammern 11 für die Granulatfüllung 9 unterbrochen, die zwischen achsnormalen, ringförmigen Trennwänden 12 aus einem Drahtgeflecht gehalten wird, dass sich zwischen dem Trägerrohr 5 und dem Gehäusemantel 13 erstreckt. Im Bereich der beiden ringförmigen Aufnahmekammern 11 sind im Gehäusemantel 13 Füllöffnungen 14 in Form von Füllstutzen vorgesehen, die mit Hilfe von Gewindestopfen 15 verschlossen werden können.

Da der Innendurchmesser des Zu- bzw. Ablaufs 3, 4 größer als der Außendurchmesser des Trägerrohrs 5 ist, kann der Einsatz 7 mit den Aufnahmekammern 8 für die Granulatfüllung 9 über den Zu- bzw. Ablauf 3, 4 axial entnommen werden, um gegebenenfalls die Granulatfüllung 9 wechseln zu können. Der Wechsel der Granulatfüllung 9 der ringförmigen Aufnahmekammern 11 erfolgt über die Füllöffnungen 14.

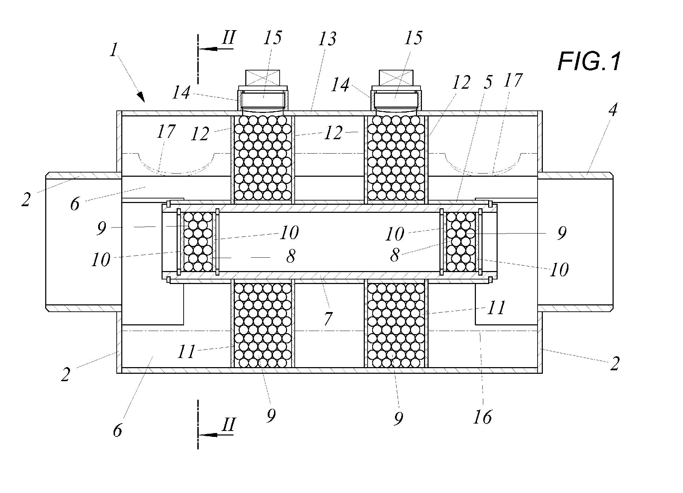

Wie den Fig. 1 und 2 entnommen werden kann, ist der Durchmesser des Gehäuses 1 etwa doppelt so groß wie der des Zu- bzw. Ablaufs 3, 4, sodass sich zwar die Strömungsgeschwindigkeit des zu behandelnden Wassers vor und hinter den Aufnahmekammern 8, 11 beruhigt, in den Aufnahmekammern 8, 11 aber wieder auf die Zu- bzw. Abflussgeschwindigkeit beschleunigt wird, was sich vorteilhaft auf die Wasserbehandlung auswirkt. Vorausgesetzt wird dabei eine Kugelform des Granulats, das vorzugsweise aus vorbehandelten Siliciumkügelchen besteht.

Falls aufgrund der Druckverhältnisse eine zusätzliche Aussteifung der ringförmigen Aufnahmekammern 11 erforderlich sein sollte, kann zwischen dem Trägerrohr 5 und dem Gehäusemantel 13 eine zusätzliche, koaxiale Stützwand 16 angeordnet werden, wie dies in den Fig. 1 und 2 strichpunktiert dargestellt ist. Diese zylindrische Stützwand 16 ist allerdings mit Durchtrittsöffnungen 17 zwischen den axialen Stützwänden 6 zu versehen, damit das zu behandelnde Wasser auch in den Ringraum zwischen der zylindrischen Stützwand 16 und dem sie umschließenden Gehäusemantel 13 gelangen kann.

## Patentansprüche

1. Vorrichtung zum Aufbereiten von Wasser mit einem zylindrischen Gehäuse (1) und mit einem koaxialen Zu- und Ablauf (3, 4) an den einander gegenüberliegenden Stirnseiten (2) des Gehäuses (1), das zwischen achsnormalen, wasserdurchlässigen Trennwänden (10, 12) Aufnahmekammern (8, 11) für eine Granulatfüllung (9) aufweist, **dadurch gekennzeichnet, dass** das Gehäuse (1) ein zentrales, mit Abstand von seinen Stirnseiten (2) endendes und über axiale Stützwände (6) mit dem Gehäusemantel (13) verbundenes Trägerrohr (5) für einen Einsatz (7) umschließt, der wenigstens eine Aufnahmekammer (8) für die Granulatfüllung (9) zwischen Trennwänden (10) aus einem Drahtgewebe bildet, und dass die axialen Stützwände (6) durch wenigstens eine ringförmige Aufnahmekammer (11) für die Granulatfüllung (9) zwischen achsnormalen, ringförmigen Trennwänden (12) aus einem Drahtgewebe unterbrochen sind.

2. Vorrichtung nach Anspruch 1, **dadurch gekennzeichnet, dass** der Außendurchmesser des Trägerrohrs (5) kleiner als der Innendurchmesser des Zu-und Ablaufs (3, 4) ist.

3. Vorrichtung nach Anspruch 1 oder 2, **dadurch gekennzeichnet, dass** die ringförmige Aufnahmekammer (11) mit einer verschließbaren Füllöffnung (14) im Gehäusemantel (13) versehen ist.

4. Vorrichtung nach einem der Ansprüche 1 bis 3, **dadurch gekennzeichnet, dass** der Einsatz (7) für das Trägerrohr (5) zwei mit axialem Abstand voneinander angeordnete Aufnahmekammern (8) aufweist.

5. Vorrichtung nach einem der Ansprüche 1 bis 4, **dadurch gekennzeichnet, dass** das Gehäuse (1) zwei mit axialem Abstand voneinander angeordnete ringförmig Aufnahmekammern (11) bildet.

6. Vorrichtung nach einem der Ansprüche 1 bis 5, **dadurch gekennzeichnet, dass** bei einer Kugelform des Granulats der Gehäusedurchmesser etwa doppelt so groß wie der des Zu- und Ablaufs (3, 4) ist.
